# EUROPÄISCHE PATENTSCHRIFT

(11) **EP 0 476 395 B1**
(45) Veröffentlichungstag und Bekanntmachung des Hinweises auf die Patenterteilung: **02.11.1995**
(21) Anmeldenummer: 91114640.5
(22) Anmeldetag: 30.08.1991
(51) Int. Cl.: F16H 57/08, F16H 57/04

(54) **Anlaufscheibenanordnung für Planetenräder eines Planetenradträgers**
Arrangement of axial bearing-discs of planet wheels in a planet carrier
Disposition des disques de support axial pour des satellites dans un porte-satellites

(30) Priorität: 15.09.1990 DE 4029373
(43) Veröffentlichungstag der Anmeldung: 25.03.1992
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Taal, Martin, W-5024 Pulheim (DE); Palmersheim, Manfred, W-5042 Erftstadt 12 (DE)
(74) Vertreter: Messulam, Alec Moses

(56) Entgegenhaltungen:
- EP-A- 0 054 852
- DE-A- 2 652 652
- DE-A- 3 644 875

## Beschreibung

Die Erfindung bezieht sich auf eine Anlaufscheibenanordnung für Planetenräder eines Planetenradträgers, der im Oberbegriff der Patentansprüche 1 und 5 erläuterten Art.

Aus der EP-PS 0 054 852 ist eine Anlaufscheibenanordnung für Planetenräder eines Planetenradträgers, der in den Oberbegriffen der Patentansprüche 1 und 5 erläuterten Art bekannt, wobei an den Innenumfängen sowohl der inneren als auch der äußeren Anlaufscheiben Ausnehmungen vorgesehen sind, die mit an anliegenden Flächen des Planetenradträgers vorgesehenen Schrägen und Ausnehmungen zusammenwirken, um Schmiermittel zu den Lagerungen der Planetenräder zu führen.

Diese bekannte Anlaufscheibenanordnung weist den Nachteil auf, daß die in anliegenden Flächen des Planetenradträgers vorgesehenen Schrägen und Ausnehmungen Schmiermittel kaum in nennenswerten Mengen sammeln können.

Aus der DE-OS 26 52 652 ist eine Axialsicherung für Planetenbolzen eines Planetenradträgers bekannt, wobei das Sicherungsblech am inneren Umfang nach außen abgebördelt ist und eine Ölfangtasche bildet, die über mehrere schräge Bohrungen im Planetenradträger Schmiermittel zur Lagerung der Planetenräder führt.

Die Anordnung des zusätzlichen Sicherungsbleches und die Einbringung der schrägen Bohrungen im Planetenradträger erfordern einen beträchtlichen Herstellungsaufwand.

Aus der DE-PS 36 44 875 ist eine Lageranordnung für Planetenräder eines Planetenradträgers bekannt, bei der Anlaufscheiben benachbarter Planetenräder zusammengefaßt sind.

Die Aufgabe der Erfindung ist es, eine Anlaufscheibenanordnung für Planetenräder eines Planetenradträgers, der im Oberbegriff des Patentanspruches 1 erläuterten Art derart zu verbessern, daß bei geringem Bauaufwand eine erhebliche Vergrößerung der Schmiermittelmenge, die der Lagerung der Planetenradträger zugeleitet werden kann, erreicht wird.

Gemäß der Erfindung wird diese Aufgabe gelöst, indem eine Anlaufscheibenanordnung für Planetenräder eines Planetenradträgers, der im Oberbegriff des Patentanspruches 1 erläuterten Art, die im Kennzeichenteil des Patentanspruches 1 aufgezeigten Merkmale aufweist.

Dadurch, daß die inneren Anlaufscheiben, wie an sich bekannt, als gelochte Scheiben aus Stahl ausgebildet sind, die äußeren Anlaufscheiben, wie an sich bekannt, z.B. als bronzeplattierte Scheiben ausgebildet und festgelegt sind oder bei benachbarten Planetenrädern zusammengefaßt sind und an ihren Öffnungen für die Planetenradbolzen Ausnehmungen aufweisen und die zur Sonnenradöffnung des Planetenradträgers gerichteten Seitenkanten der äußeren Anlaufscheiben die Schräge und/oder Ausnehmungen in Planentenradträger übergreifend, kreisbogenförmig verlaufen und Schmiermittel-Sammeltaschen bilden, wird mit einfachen Mitteln ein Sammelvolumen für Schmiermittel geschaffen, von dem aus die Lagerungen der Planetenräder in günstiger Weise mit dem notwendigen Schmiermittel versorgt werden können.

In den abhängigen Ansprüchen 2 bis 4 und im unabhängigen Anspruch 5 sind weitere zweckmäßige Ausführungsformen der Erfindung erläutert.

Die Erfindung wird anhand einiger in den Zeichnungen gezeigter Ausführungsbeispiele näher erläutert. Es zeigt:
- Fig. 1: einen vertikalen Schnitt durch einen Planetenradträger;
- Fig. 2: eine Ansicht gemäß den Pfeilen II-II in Fig. 1;
- Fig. 3: eine vergrößerte Darstellung des Bereiches III in Fig. 1;
- Fig. 4: eine Schnittansicht entlang der Linie IV-IV in Fig. 3;
- Fig. 5: eine weitere Ausführungsform einer Anlaufscheibenanordnung der Erfindung;
- Fig. 6: eine weitere Ausführungsform einer Anlaufscheibenanordnung gemäß der Erfindung und
- Fig. 7: noch eine weitere Ausführungsform einer Anlaufscheibenanordnung gemäß der Erfindung.

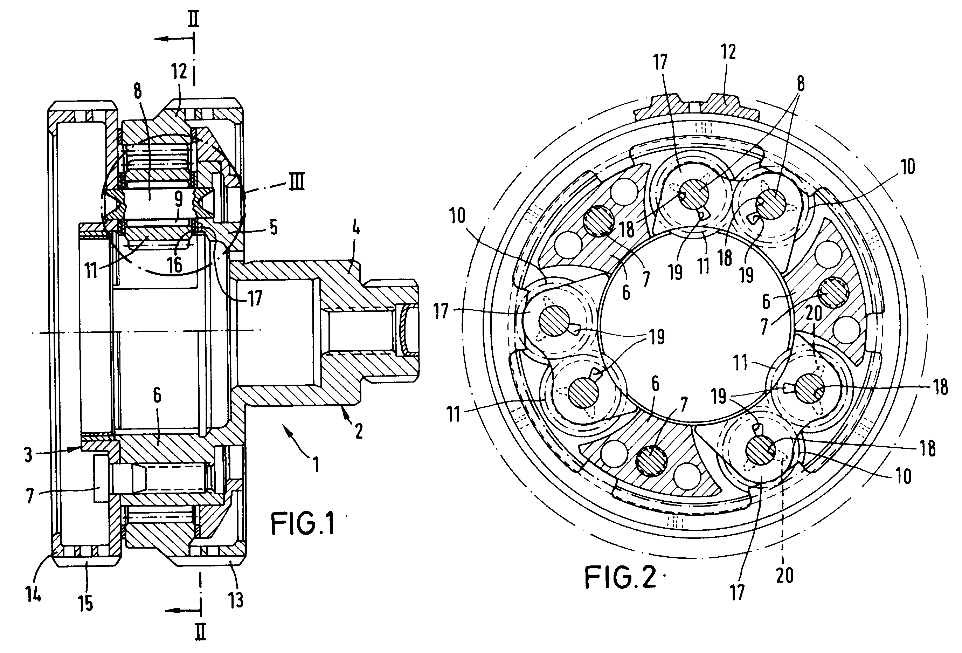

In Fig. 1 ist ein Planetenradträger 1 eines Planetenradsatzes gezeigt, der im wesentlichen aus einem Nabenteil 2 und einem Scheibenteil 3 besteht. Das Nabenteil 2 weist einen Nabenstumpf 4 und einen Flanschteil 5 auf und besitzt sich axial erstreckende Stege 6, über die es z.B. über Schrauben 7 mit dem Scheibenteil 3 verbunden wird.

In den Bereichen zwischen den Stegen 6 sind Planetenradbolzen 8 angeordnet, auf denen über Nadellager 9 Planetenräder 10 und 11 drehbar gelagert sind.

Die Planetenräder 10 stehen in Eingriff mit einem Ringrad 12 und mit den Planetenrädern 11, die wieder in Eingriff mit einem Sonnenrad (nicht gezeigt) des Planetenradsatzes stehen.

Das Ringrad 12 kann hierbei außen eine Splinesverzahnung 13 aufweisen, mit dem es Kupplungsscheiben einer Mehrscheibenkupplung (nicht gezeigt) aufnehmen kann. In ähnlicher Weise kann das Scheibenteil 3 einen Trommelansatz 14 aufweisen, an dem eine Splinesverzahnung 15 für Kupplungsscheiben einer Mehrscheibenkupplung (nicht gezeigt) ausgebildet sind.

Die Planetenräder 10 und 11 sind axial über paarweise angeordnete innere und äußere Anlaufscheiben 16 und 17 abgestützt. Die inneren Anlaufscheiben 16 sind hierbei wie bekannt, als gelochte Anlaufscheiben aus Stahl ausgebildet, während die äußeren Anlaufscheiben 17 z.B. als bronzeplattierte Scheiben aus Blech ausgebildet sind, die an ihren die Planetenradbolzen 8 aufnehmenden Öffnungen 18 mit Ausnehmungen 19 versehen sind. In bekannter Weise können die Laufflächen der äußeren Anlaufscheiben 17 mit üblichen Schmiermittelnuten 20 versehen sein. Vorzugsweise werden die Schmiermittelnuten 20, wie in den Fig. gezeigt, als V-förmige Taschennuten ausgebildet.

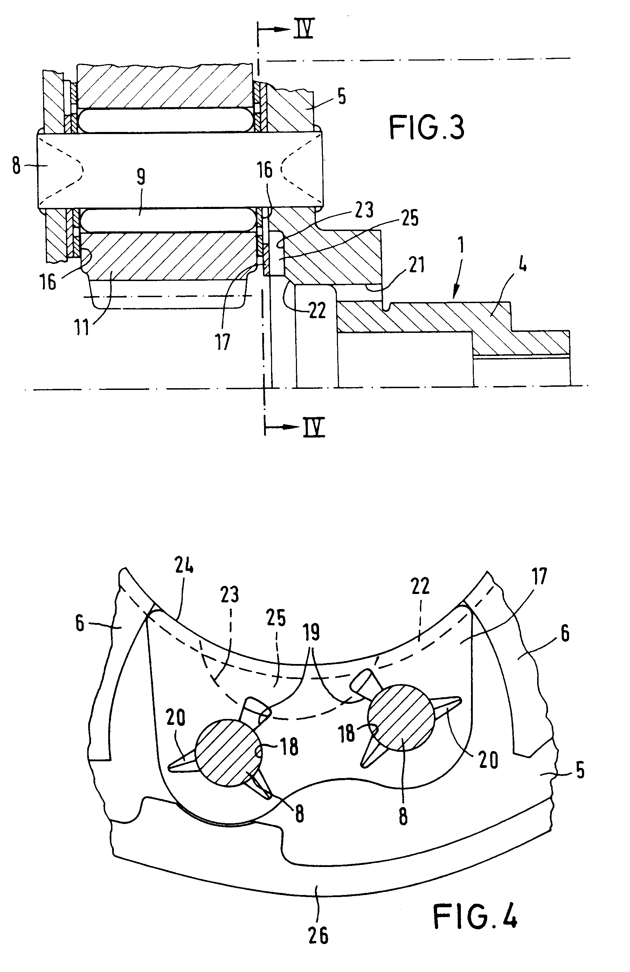

Die für die Erfindung wesentlichen Bereiche am Planetenradträger sind durch vergrößerte Darstellung des im Kreis III in der Figur 1 gekennzeichneten Ausschnitt in Fig. 3 und die Schnittansicht IV-IV in Fig. 3 in Verbindung mit Fig. 4 näher erläutert.

Wie aus den Figuren 3 und 4 zu ersehen ist, ist der Nabenstumpf 4 im Bereich seines Übergangs zum Scheibenteil 5 mit mehreren axialen Schmiermittelbohrungen 21 versehen. Der zum Sonnenrad (nichtgezeigt) gerichtete Innenumfang des Planetenradträgers 1 geht über eine Schräge 22 in die den Anlaufscheiben 17 anliegenden Anlauffläche des Flanschteiles 5 über und in diesen Anlaufflächen sind sich radial erstreckende Ausnehmungen 23 ausgebildet. Diese Ausnehmungen 23 können bereits im Rohteil des durch z.B. Schmieden oder Sintern hergestellten Planetenradträgers vorgesehen sein oder bei der Bearbeitung z.B. durch Fräsen hergestellt werden.

Über die axialen Schmiermittelbohrungen 21 ankommendes Schmiermittel wird durch die Fliehkraft des umlaufenden Planetenradträgers 1 radial nach außen beschleunigt und kann daher über die Schräge 22 in die Ausnehmungen 23 gelangen.

Da die Anlaufscheiben für die beiden Planetenradbolzen 8 zu einer Anlaufscheibe 17 zusammengefaßt sind, die mit ihrer zur Sonnenradöffnung des Planetenradträgers gerichteten Seitenkante 24 die Schräge 22 und die Ausnehmung 23 übergreifend, kreisbogenförmig verläuft, wird eine von radial innen offene Schmiermittel-Sammeltasche 25 gebildet. Schmiermittel unter der Wirkung der Fliehkraft wird über die Ausnehmungen 19 am Innenumfang der Öffnungen 18 für die Planetenradbolzen 8 zu den gelochten Anlaufscheiben 16 und über diese zur Lagerung (Nadellager 9) der Planetenräder 11 geleitet.

Da die äußeren Anlaufscheiben 17 stationär sind, d.h. nicht mit umlaufen, kann die optimale Form der Ausnehmungen 23 in Verbindung mit der Lage der Ausnehmungen 19 für jeden Anwendungsfall entsprechend ermittelt werden.

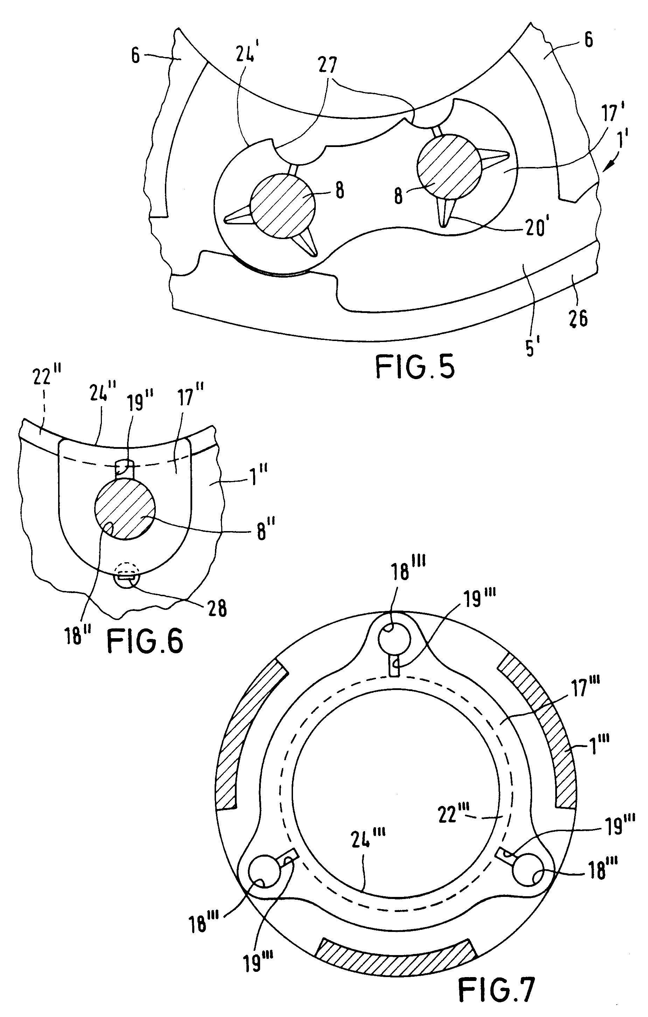

Aus Fig. 5 ist eine weitere Ausführungsform der Erfindung ersichtlich, bei der im Flanschteil 5' eines Planetenradträgers 1' benachbart den äußeren Anlaufscheiben 17' keine Schräge und auch keine Ausnehmung vorgesehen sind, sondern an der für zwei Planetenräder vorgesehenen zusammengefaßten Anlaufscheibe 17' in Form einer Acht, die z.B. eine Anlaufscheibe 26 für das Ringrad abstützt, sind zu den inneren Anlaufscheiben weisende Schmiermittelnuten 20# vorgesehen und an ihrer zur Sonnenradöffnung liegenden Seitenkante 24' sind bogenförmige Ausschnitte 27 angeordnet. Je nach Dicke der äußeren Anlaufscheibe 17' kann bereits die Anordnung solcher Schmiermittel-Sammeltaschen für eine Verbesserung schwieriger Schmierverhältnisse ausreichen.

Aus Fig. 6 ist eine weitere Ausführungsform der Erfindung ersichtlich, hier wird an einem Planetenradträger 1'' mit einem Planetenradbolzen 8'' eine äußere Anlaufscheibe 17'' mit einer am Innenumfang 18'' für den Planetenradbolzen 8'' vorgesehenen Ausnehmung 19'' derart angeordnet, daß ihre zur Sonnenradöffnung gerichtete Seitenkante 24'' eine Schräge 22'' übergreifend kreisbogenförmig verläuft. Die Anlaufscheibe 17'' muß hierbei in bekannter Weise durch eine abgebogene Zunge, Lasche 28 oder dergleichen gegen Mitdrehen gesichert werden.

Aus Fig. 7 ist eine weitere, besonders zweckmäßige Ausführungsform der Erfindung ersichtlich, bei der eine einzige äußere Anlaufscheibe 17''' für die drei Planetenräder eines Planetenradträgers 1''' vorgesehen ist, die mit ihrem Innenumfang 24''' die zur Sonnenradöffnung gerichtete Schräge 22''' übergreift und mit Ausnehmungen 19''' versehen ist, die Schmiermittel zu den Öffnungen 18''' für die Planetenradbolzen leiten.

Je nach Anwendungsfall kann hierbei die Ausführungsform der äußeren Anlaufscheiben entsprechend angepaßt werden, um zwischen ihrer nach innen ragenden Seitenkante und den benachbarten Flächen des Planetenradträgers entsprechende Schmiermittel-Sammeltaschen zu bilden.

## Patentansprüche

1. Anlaufscheibenanordnung für Planetenräder eines Planetenradträgers, mit paarweise aneinanderliegend angeordneten, Ausnehmungen aufweisenden Anlaufscheiben, von denen zumindest die inneren Anlaufscheiben (16) als nicht drehfest festgelegte, gelochte Scheiben aus Stahl ausgebildet sind und die äußeren Anlaufscheiben (17) als bronzeplattierte Scheiben mit an ihren Öffnungen (18) für die Planetenradbolzen (8) mit Ausnehmungen (19) versehene Scheiben ausgebildet sind, die die zur Sonnenradöffnung des Planetenradträgers (1) gerichteten Schrägen (22) und Ausnehmungen (23) im Planetenradträger (1) übergreifen und Schmiermittel-Sammeltaschen (25) bilden,
**dadurch gekennzeichnet**, daß
- die äußeren Anlaufscheiben (17) am Planetenradträger (5) drehfest festgelegt sind und eine der Sonnenradöffnung in etwa folgende kreisbogenförmig verlaufende Seitenkante (24) aufweisen.

2. Anlaufscheibenanordnung nach Anspruch 1,
**dadurch gekennzeichnet**, daß
- die äußeren Anlaufscheiben benachbarter Planetenräder (10 und 11) zu einer einstückigen Anlaufscheibe (17) zusammengefaßt sind und somit drehfest gegenüber dem Planetenradträger (1) festgelegt sind.

3. Anlaufscheibenanordnung nach Anspruch 1,
**dadurch gekennzeichnet**, daß
- die äußeren Anlaufscheiben (17'') durch eine Lasche (28) in einer Ausnehmung im Planetenradträger (1) drehfest festgelegt sind.

4. Anlaufscheibenanordnung nach Anspruch 1,
**dadurch gekennzeichnet**, daß
- die Anlaufscheiben benachbarter Planetenräder zu einem einzigen Anlaufscheibenring (17''') zusammengefaßt sind, der mit seinem Innenumfang (24''') die Schrägen (22''') und ggf. Ausnehmungen im Planetenradträger (1''') ringförmig übergreift.

5. Anlaufscheibenanordnung für Planetenräder eines Planetenradträgers, mit paarweise aneinanderliegend angeordneten, Ausnehmungen aufweisenden Anlaufscheiben, von denen zumindest die inneren Anlaufscheiben als nicht drehfest festgelegte, gelochte Scheiben aus Stahl ausgebildet sind und die äußeren Anlaufscheiben (17') als bronzeplattierte Scheiben mit an ihren Öffnungen für die Planetenradbolzen (8) anschließenden Schmiermittelnuten (20') versehene Scheiben ausgebildet sind,
**dadurch gekennzeichnet**, daß
- die zur Sonnenradöffnung des Planetenradträgers (1) gerichtete Seitenkante (24') der äußeren Anlaufscheibe (17') mit Ausschnitten (27) versehen ist, die in Verbindung mit der benachbarten Wandung des Planetenradträgers (1) Schmiermittelsammeltaschen bilden.

## Claims

1. Run-up disc arrangement for planet wheels of a planet carrier with run-up discs which are arranged so as to rest on one another in pairs, have recesses and of which at least the internal run-up discs (16) are designed as perforated steel discs which are not fixed in a non-rotatable manner and the external run-up discs (17) are designed as bronze-plated discs with discs which are provided with recesses (19) at their openings (18) for the planet wheel gudgeons (8), overlap the bevels (22) and recesses (23) in the planet carrier (1) directed toward the sun wheel opening of the planet carrier (1) and form lubricant collecting pockets (25), characterised in that the external run-up discs (17) are non-rotatably fixed on the planet carrier (5) and have a lateral edge (24) extending in an arc and substantially following the sun wheel opening.

2. Run-up disc arrangement according to claim 1, characterised in that the external run-up discs of adjacent planet wheels (10 and 11) are combined to form an integral run-up disc (17) and are therefore fixed non-rotatably relative to the planet carrier (1).

3. Run-up disc arrangement according to claim 1, characterised in that the external run-up discs (17'') are fixed non-rotatably in a recess in the planet carrier (1) by a tab (28).

4. Run-up disc arrangement according to claim 1, characterised in that the run-up discs of adjacent planet wheels are combined to form a single run-up disc ring (17''') which, with its internal periphery (24''') annularly overlaps the bevels (22''') and optionally recesses in the planet carrier (1''').

5. Run-disc arrangement for planet wheels of a planet carrier with run-up discs which are arranged so as to rest on one another in pairs, have recesses and of which at least the internal run-up discs are designed as perforated steel discs which are not fixed in a non-rotatable manner and the external run-up discs (17') are designed as bronze-plated discs with discs provided with lubricant grooves (20') communicating with their openings for the plant wheel gudgeons (8), characterised in that the lateral edge (24') directed towards the sun wheel opening of the planet carrier (1), of the external run-up disc (17') is provided with cutouts (27) which form lubricant collecting pockets in conjunction with the adjacent wall of the planet carrier (1).

## Revendications

1. Système de plaquettes de butée contre lesquelles frottent les satellites d'un porte-satellites, comprenant des plaquettes de butée disposées appliquées l'une contre l'autre par paires et pourvues d'évidements, dont au moins les plaquettes de butée intérieures (16) sont réalisées sous la forme de plaquettes perforées en acier, qui ne sont pas immobilisées en rotation, et les plaquettes de butée extérieures (17) sont réalisées comme des plaquettes revêtues de bronze et pourvues d'encoches (19) sur leurs ouvertures (18) pour le passage des axes (8) sur lesquels sont montés les satellites, plaquettes extérieures qui recouvrent des biseaux (22) et des évidements (23) ménagés dans le porte-satellites (1) et dirigés vers l'ouverture recevant le planétaire du porte-satellites (1), de manière qu'elles forment des poches accumulatrices de lubrifiant (25),
caractérisé en ce que les plaquettes de butée extérieures (17) sont immobilisées en rotation sur le porte-satellites (1) et présentent un bord latéral (24) s'étendant en arc de cercle et suivant à peu près l'ouverture pour le planétaire.

2. Système de plaquettes de butée selon la revendication 1, caractérisé en ce que les plaquettes de butée extérieures de satellites voisins (10 et 11) sont réunies en une plaquette de butée (17) d'un seul tenant et sont ainsi immobilisées en rotation par rapport au porte-satellites (1).

3. Système de plaquettes de butée selon la revendication 1, caractérisé en ce que les plaquettes de butée extérieures (17'') sont immobilisées en rotation dans le porte-satellites (1) par une patte (28) engagée dans un évidement.

4. Système de plaquettes de butée selon la revendication 1, caractérisé en ce que les plaquettes de butée de satellites voisins sont réunies en un seul disque de butée (17''') qui, par son pourtour intérieur (24'''), recouvre en anneau le biseau (22''') et, éventuellement, des évidements ménagés dans le porte-satellites (1''').

5. Système de plaquettes de butée contre lesquelles frottent les satellites d'un porte-satellites, comprenant des plaquettes de butée disposées appliquées l'une contre l'autre par paires et présentant des évidements, dont au moins les plaquettes de butée intérieures sont réalisées sous la forme de plaquettes perforées en acier, qui ne sont pas immobilisées en rotation, et les plaquettes de butée extérieures (17') sont réalisées comme des plaquettes revêtues de bronze avec des rainures de graissage (20') se raccordant à leurs ouvertures pour le passage des axes (8) sur lesquels sont montés les satellites,
caractérisé en ce que le bord latéral (24') de la plaquette de butée extérieure (17'), bord qui est dirigé vers l'ouverture pour le planétaire du porte-satellites (1), est pourvu de découpes (27) formant des poches accumulatrices de lubrifiant en combinaison avec la paroi voisine du porte-satellites (1).
